# FASCICULE DE BREVET EUROPEEN

(11) **EP 1 368 716 B1**
(45) Date de publication et mention de la délivrance du brevet: **09.02.2005**
(21) Numéro de dépôt: 01272218.7
(22) Date de dépôt: 21.12.2001
(51) Int. Cl.: G06F 1/00

(54) **METHODE ANTI-CLONAGE**
ANTI-KLONING-VERFAHREN
ANTI-CLONING METHOD

(30) Priorité: 22.12.2000 CH 25192000; 26.01.2001 CH 1372001
(43) Date de publication de la demande: 10.12.2003
(73) Titulaire: Nagravision SA, 1033 Cheseaux-sur-Lausanne (CH)
(72) Inventeur: JAQUIER, Jean-Luc, CH-1093 La Conversion (CH)
(74) Mandataire: Wenger, Joel-Théophile
(86) Numéro de dépôt international: PCT/IB2001/002712
(87) Numéro de publication internationale: WO 2002/052389

(56) Documents cités:
- EP-A- 0 836 160
- WO-A-96/25814
- FR-A- 2 762 118

## Description

La présente invention concerne une méthode visant à détecter une duplication d'un module de sécurité, en particulier lors de l'interaction de ce module de sécurité avec plusieurs unités d'utilisateurs.

Ces unités d'utilisateur sont connectées à un ou des réseaux proposant des produits ou services. Ces produits ou services étant soumis à une utilisation conditionnelle, l'utilisation de ces produits est soumise à un contrôle, est c'est pourquoi ces unités disposent d'un module de sécurité en charge de l'identification et de la gestion de l'autorisation' d'accès aux dits réseaux.

Ces unités d'utilisateur se présentent sous plusieurs formes, par exemple un décodeur de télévision à péage, un ordinateur voire un téléphone portable, un "palm-top", un PDA, une radio, une télévision une borne multimédia, un distributeur de billet.

Ce module de sécurité se présente généralement sous la forme d'une carte à puce, de la forme d'une carte de crédit ou d'une SIM, comprenant un crypto-processeur. Cette carte permet de fournir les informations nécessaires pour s'identifier sur le réseau considéré par l'intermédiaire des opérations de décryptage utilisant des clés stockées dans la mémoire du crypto-processeur réputée inviolable.

Ce module de sécurité peut être amené à échanger des informations confidentielles avec l'unité d'utilisateur, par exemple lorsqu'il s'agit de produire la clé mettant en oeuvre les opérations cryptographiques associées à l'identification ou au payement d'un produit.

Ces modules de sécurités peuvent être connectés avec plusieurs unités d'utilisateur selon les besoins de l'utilisateur. Une telle utilisation est admise par l'opérateur du réseau et c'est pourquoi le module de sécurité est généralement amovible. Cette situation se rencontre dans le domaine de la télévision à péage ou dans le domaine des téléphone mobiles.

Du, fait de la valeur que représente ce module de sécurité, en particulier dans des applications de porte-monnaie électronique, la tentation est grande pour des contrefacteurs de reproduire à l'identique de tels modules.

Bien que le centre de gestion soit à même de détecter l'utilisation simultanée de deux modules possédant le même numéro de série, si cette utilisation se fait à des moments différents, il est difficilement possible pour le centre de gestion de savoir s'il s'agit du même module ou bien d'un clone.

Une première solution est décrite dans le document US 4'672'533 et propose de créer un numéro de session qui doit changer à chaque connexion avec le centre de gestion. Il s'agit là d'une identification préalable à toutes transactions et, bien que répondant au besoin de détecter des copies de cartes, elle permet de fonctionner que dans un environnement dans lequel la connexion avec le centre de gestion est obligatoire.

Une deuxième solution est décrite dans le document EP 0 836 160. Cette solution utilise une historique des transactions effectuées à partir d'une carte bancaire pour rejeter d'éventuelles copies illicites de cette carte bancaire. Elle comprend une étape de comparaison entre une historique stockée sur une carte bancaire à valider et une historique de transactions stockée sur un server de validation représentant des transactions déjà rapportées au serveur de validation par une carte possédant le même identifiant que la carte à valider. Toutefois, les modalités précises de cette étape de comparaison ne sont pas divulguées.

Le but de la présente invention est de proposer une méthode qui permette d'empêcher l'utilisation de plus d'un module de sécurité identique pour l'identification et l'utilisation des ressources gérées par au moins un centre de gestion.

Ce but est atteint par une méthode de contrôle anti-clonage d'un module de sécurité comprenant au moins un identifiant unique, destiné à être connecté à une unité d'utilisateur comprenant au moins un identifiant unique, cette unité pouvant être connectée à un centre de gestion, cette méthode comprenant les étapes suivantes:
- collecter par le module de sécurité, l'identifiant unique de chaque unité d'utilisateur auquel ledit module est connecté,
- sur requête du centre de gestion, transmission de l'identifiant unique au module de sécurité et des identifiants uniques et propres aux unités d'utilisateurs antérieurement connectés avec ce module de sécurité leurs chronologie,
- comparaison par le centre de gestion de ces identifiants avec les identifiants mémorisés lors de la dernière connexion avec ledit centre,
- autoriser ledit module de sécurité si la liste correspond avec la liste précédemment mémorisée, sinon autoriser ce module de sécurité pour autant que le ou les identifiants inconnus suivent la liste précédemment mémorisée.
- interdire l'accès aux ressources gérées par le centre de gestion si le dernier identifiant mémorisé n'est pas compris dans les identifiants uniques transmis.

Ainsi, le contrôle de la validité du module de sécurité n'est pas uniquement basé sur ses données statiques mais intègre une donnée variable qui retrace les différentes unités d'utilisateurs utilisées.

Grâce à cette méthode, un module de sécurité copié intégralement diffère de l'original dès sa première utilisation avec une unité d'utilisateur.

Prenons pour exemple un module de sécurité A qui contient des numéros uniques i, j, k. Lors de cette première utilisation, la zone mémoire du module de sécurité va stocker le numéro unique I de l'unité d'utilisateur Ul. Le module de sécurité original contiendra donc l'image i, j, k, l. Une copie de ce module, connecté à une unité Up, va contenir l'image i, j, k, p.

Le premier module de sécurité qui sera connecté au centre de gestion par l'unité d'utilisateur, va transmettre ses informations, par exemple i, j, k, l. Si le module clone vient à être également connecté, l'image des unités connectées à ce module devrait nécessairement contenir i, j, k, l. Dans notre cas, le membre I est absent et indique que ce module n'est pas celui précédemment connecté. Le clone est ainsi détecté.

Selon le protocole de contrôle choisi, le centre de gestion, en cas de détection d'un tel. module, peut déclarer ce module de sécurité invalide, bloquant l'utilisation du véritable module par la même occasion.

Selon une variante de réalisation, il suffit de mémoriser deux numéros uniques pour obtenir le but recherché, c'est-à-dire le numéro de l'unité utilisateur courant et le numéro de l'unité utilisateur précédent. Lorsque le module de sécurité est déplacé d'unité utilisateur, le numéro courant devient le numéro précédent, le numéro d'unité utilisateur devenant le nouveau numéro courant.

Grâce à cette méthode, un module de sécurité peut être immédiatement opérationnel avec une unité d'utilisateur, sans exiger une autorisation par un centre de gestion. Une liaison avec le centre de gestion peut être effectuée toute les n transactions, selon une durée d'utilisation, aléatoirement ou sur requête du centre de gestion. Si la mémoire du module de sécurité est pleine, il peut être exigé qu'une connexion soit effectuée avec le centre de gestion avant de libérer de la place en mémoire.

Cette invention peut ainsi couvrir le cas où une unité d'utilisateur fonctionnerait sans liaison avec un centre de gestion. Ceci peut être le cas pour des terminaux de paiement limités à de petites sommes ou pour l'accès à des services tels que la télévision à péage ou la réception de radio numérique (DAB) par exemple. Dans ces cas, la rapidité de disponibilité est un atout pour convaincre l'utilisateur à ce type de services et il est acceptable de n'effectuer que des contrôles sporadiques. Lorsque l'utilisateur se connecte sur un distributeur de billet relié au centre, la vérification est faite à ce moment.

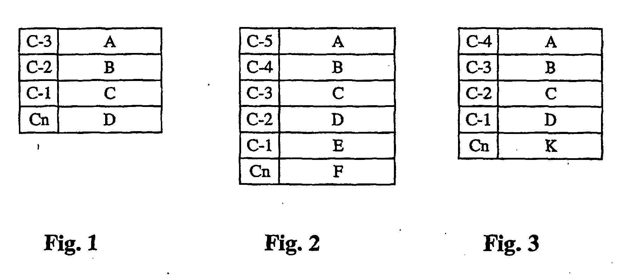

Cette configuration sera avantageusement décrite grâce aux figures 1 à 3 qui représentent la zone mémoire d'un module de sécurité.

Prenons l'exemple de la figure 1, d'un module N comprenant deux zones, l'une pour le numéro de l'unité utilisateur courant Cn, l'autre pour le numéro du terminal précédent C-1.

Dans le module N, se trouve le numéro de l'unité utilisateur C dans la zone précédente C-1 et le numéro de l'unité utilisateur D dans la zone courante Cn.

Prenons l'exemple d'une connexion de ce module de sécurité à une première unité d'utilisateur E puis une seconde unité F. La mémoire du module contiendra les numéros d'identification tels qu'illustrés par la figure 2. Le zone courante Cn contient l'identificateur F.

Lors d'une connexion avec un centre de gestion, ces numéros A à F sont transmis et mémorisés dans le centre pour contrôle. L'image précédente mémorisée contenait les numéros d'identification A à D et il y a donc identité entre l'image mémorisée et une partie des numéros transmis.

Il est à noter que selon l'invention, il n'est pas nécessaire de se connecter au centre de gestion à chaque nouvelle connexion avec une unité d'utilisateur. Le contrôle peut se faire sporadiquement, aléatoirement ou sur demande du centre de gestion.

Un module qui aurait été cloné dans l'état de la figure 1, soit avec les numéros A à D, et qui serait connecté à une unité d'utilisateur K, présente une zone mémoire telle qu'illustrée à la figure 3.

Lorsque ces informations A à D, K sont transmises au centre de gestion, le membre K est inconnu et ne suis pas l'image précédente, soit l'identificateur F. Le centre de gestion peut donc en déduire qu'il existe deux modules de sécurité portant le même numéro unique.

Selon une variante simplifiée de l'invention, il n'est pas nécessaire de conserver les numéros d'identificateur après un contrôle positif. Seul les derniers numéros sont conservés comme trace des précédentes connexions avec les unités d'utilisateur. Par derniers on entend par exemple les deux ou trois derniers.

De ce fait, il suffira que dans les numéros transmis subséquemment, l'on retrouve ces derniers numéros pour suivre la trace de ce module.

Selon notre exemple précédent, une fois le module de la figure 1 accepté par le centre de gestion, les numéros A, B sont effacés de la zone mémoire du module pour ne conserver que C, D.

Ce module est ensuite connecté avec une unité E puis une unité F. Ces données C, D, E, F sont transmises au centre de gestion pour vérification. Les valeurs C, D étant présentes dans les données précédemment mémorisées, le module est considéré comme valide et les identificateurs E, F sont effacés.

Dans le cas de la figure 3, le module cloné se connecte avec une unité K qui va transmettre ces données A, B, C, D, K au centre de gestion. Celui-ci recherche la présence de E, F, selon la dernière connexion, et du fait que ces identifiants ne sont pas présents dans les données transmises, le centre peut détecter la présence d'un module de sécurité falsifié.

Selon une forme de réalisation, les données échangées entre le module de sécurité et l'unité d'utilisateur sont encryptées par une clé d'appariement, c'est-à-dire une clé propre au couple module de sécurité/unité d'utilisateur. Cette clé peut être de plusieurs types, soit une clé symétrique secrète, soit une clé asymétrique (clé publique, clé privée). Suivant la nature de la clé, il est possible d'utiliser cette clé comme identifiant unique tel que décrit plus haut pour identifier l'unité d'utilisateur. Dans ce cas, ce n'est pas l'unité d'utilisateur en temps que tel qui est identifiée mais le couple formé par le module de sécurité et l'unité d'utilisateur.

Il est dès lors possible de transmettre tout ou partie de cette clé d'appariement à titre d'identifiant. En effet, pour les opérations d'identification, il est possible d'utiliser une partie de cette clé, en particulier si l'on ne souhaite pas que cette clé soit divulguée. Selon une forme particulière, c'est le modèle clé publique/clé privée qui est utilisé pour comme clé d'appariement (clés asymétriques) et c'est la clé publique qui est utilisée comme identifiant.

## Revendications

1. Méthode de contrôle anti-clonage d'un module de sécurité comprenant au moins un identifiant unique, destiné à être connecté à une unité d'utilisateur comprenant au moins un identifiant unique, cette unité pouvant être connectée à un centre de gestion, cette méthode comprenant les étapes suivantes:
- collecter par le module de sécurité, l'identifiant unique de chaque unité d'utilisateur auquel ledit module est connecté,
- sur requête du centre de gestion, transmission de l'identifiant unique au module de sécurité et des identifiants uniques et propres aux unités d'utilisateurs antérieurement connectés avec ce module de sécurité selon leurs chronologie,
- comparaison par le centre de gestion de ces identifiants avec les identifiants mémorisés lors de la dernière connexion avec ledit centre,
- autoriser ledit module de sécurité si la liste correspond avec la liste précédemment mémorisée, sinon autoriser ce module de sécurité pour autant que le ou les identifiants inconnus suivent la liste précédemment mémorisée, et cette méthode étant **caractérisée par** l'étape suivante:
- interdire l'accès aux ressources gérées par le centre de gestion si le dernier identifiant mémorisé n'est pas compris dans les identifiants uniques transmis.

2. Méthode selon la revendication 1, **caractérisée en ce qu'**elle consiste à effacer les identifiants dans le module de sécurité à l'exception du dernier identifiant mémorisé.

3. Méthode selon les revendications 1 et2, **caractérisée en ce que** l'identifiant est formé par tout ou partie d'une clé d'appariement en charge d'encrypter les données échangées entre le module de sécurité et l'unité d'utilisateur.

4. Méthode selon la revendication 3, **caractérisée en ce que** la clé d'appariement est de type asymétrique et que l'identifiant est représenté par la clé publique.

## Patentansprüche

1. Verfahren der Anti-Klon-Kontrolle für einen Sicherheitsmodul, der zumindest eine eindeutige Kennung umfasst und dafür bestimmt ist, an eine Benutzereinheit angeschlossen zu werden, die zumindest eine eindeutige Kennung umfasst, wobei diese Einheit mit einem Verwaltungszentrum verbunden sein kann und wobei dieses Verfahren die folgenden Schritte umfasst:
- durch den Sicherheitsmodul, Sammlung der eindeutigen Kennungen jeder Benutzereinheit, mit der dieser Modul verbunden wird,
- auf Anforderung des Verwaltungszentrums, Übermittlung der eindeutigen Kennung des Sicherheitsmoduls und, in chronologischer Folge, der eindeutigen, charakteristischen Kennungen der Benutzereinheiten, die zuvor mit diesem Sicherheitsmodul verbunden waren,
- durch das Verwaltungszentrum, Vergleich dieser Kennungen mit den Kennungen, die während der letzten Verbindung mit diesem Zentrum gespeichert worden waren,
- Autorisierung des Sicherheitsmoduls, wenn die Liste der früher gespeicherten Liste entspricht, andernfalls Autorisierung dieses Sicherheitsmoduls, sofern sich der oder die unbekannten Kennungen der zuvor gespeicherten Aufzählung anschliessen,
und wobei dieses Verfahren durch den folgenden Schritt gekennzeichnet ist:
- Untersagung des Zugriffs auf die durch das Verwaltungszentrum verwalteten Ressourcen, wenn die letzte gespeicherte Kennung nicht unter den eindeutigen Kennungen zu finden ist, die übermittelt werden.

2. Verfahren gemäss Anspruch 1, **dadurch gekennzeichnet, dass** es darin besteht, die Kennungen im Sicherheitsmodul mit Ausnahme der letzten gespeicherten Kennung zu löschen.

3. Verfahren gemäss Ansprüchen 1 und 2, **dadurch gekennzeichnet, dass** die Kennung durch den ganzen oder einen Teil eines Paarungsschlüssels gebildet wird, der die Aufgabe hat, die zwischen dem Sicherheitsmodul und der Benutzereinheit ausgetauschten Daten zu verschlüsseln.

4. Verfahren nach Anspruch 3, **dadurch gekennzeichnet, dass** der Paarungsschlüssel vom asymmetrischen Typ ist und dass die Kennung durch den öffentlichen Schlüssel dargestellt wird.

## Claims

1. An anti-cloning control method of a security module comprising at least one unique identification number destined to be connected to a user unit comprising at least one unique identification number, this unit being able to be connected to an management centre, this method comprising the following steps:
- collecting by the security module the unique identification number of each user unit to which said module is connected,
- upon request of the management centre transmitting the unique identification number of the security module and the unique identification numbers specific to the user units previously connected to this security module,
- comparing by the management centre these identification numbers with the list previously memorised during the last connection with said centre,
- authorising said security module if the list corresponds with the list previously memorised, if not authorising this security module provided that the unknown user identifications follow the list previously memorised, and, this method being **characterized by** the following step :
- preventing access to resources administered by the management centre if the last memorised identification number is not contained in the transmitted unique identification numbers.

2. A method according to Claim 1, **characterised in that** it consists in erasing the unique identification numbers of the user units in the security module excepting the last memorised one.

3. A method according to Claim 1 and 2, **characterised in that** the unique identification number is formed by all or part of a pairing key in charge of encrypting the data exchanged between the security module and the user unit.

4. A method according to Claim 3, **characterised in that** the pairing key is of the asymmetric type and that the unique identification number is represented by the public key.
